# EUROPÄISCHE PATENTANMELDUNG

(11) **EP 1 873 379 A2**
(43) Veröffentlichungstag der Anmeldung: **02.01.2008**
(21) Anmeldenummer: 07010588.7
(22) Anmeldetag: 29.05.2007
(51) Int. Cl.: F02D 19/06

(54) **Verfahren zum Betreiben einer sowohl mit Gas als auch Benzin befeuerten Brennkraftmaschine**

(30) Priorität: 01.07.2006 DE 102006030495
(71) Anmelder: Volkswagen Aktiengesellschaft, 38436 Wolfsburg (DE)
(72) Erfinder: Pott, Ekkehard, 38518 Gifhorn (DE); Fladung, Oliver, 38122 Braunschweig (DE); Theobald, Jörg, 38165 Lehre (DE); Schweizer, Marc-Jochen, 38106 Braunschweig (DE)

(57) **Zusammenfassung**

Die Erfindung betrifft ein Verfahren zum Betreiben einer Brennkraftmaschine, insbesondere eines Kraftfahrzeuges, welche sowohl mit Benzin und/oder Diesel als auch mit Gas, insbesondere Erdgas (CNG) oder Flüssiggas (LPG), betrieben wird. Hierbei wird im Gasbetrieb für vorbestimmte Änderungen des Betriebszustandes der Brennkraftmaschine zusätzlich zum Gasbetrieb zeitlich begrenzt solange ein Benzin- oder Diesel-Massenstrom zum Erreichen des geänderten Betriebszustandes eingestellt, bis ein Gasmassenstrom allein den geänderten Betriebszustand aufrecht erhalten kann.

## Beschreibung

Die Erfindung betrifft ein Verfahren zum Betreiben einer Brennkraftmaschine, insbesondere eines Kraftfahrzeuges, welche sowohl mit Benzin und/oder Diesel als auch mit Gas, insbesondere Erdgas (CNG) oder Flüssiggas (LPG), betrieben wird, gemäß dem Oberbegriff des Patentanspruchs 1.

Im Stand der Technik ist es bei Quasi-Monovalenten (auf Gasbetrieb optimierten) sowie bei Bivalenten (auf Benzinbetrieb optimierten) CNG-Motoren (CNG = Compressed Natural Gas - Erdgas) bekannt, diese mit zwei kompletten Sätzen von Einspritzvorrichtungen auszurüsten. Neben einer zylinderselektiven Benzineinspritzung, beispielsweise einer Direkt- oder Saugrohreinspritzung, sind zusätzlich zylinderselektive CNG-Einblaseventile, beispielsweise für eine Direkteinblasung oder Einblasung ins Saugrohr, vorgesehen.

Weiterhin ist beispielsweise aus der DE 103 39 854 A1 oder der DE 101 46 063 A1 eine Zentraleinblasung für CNG-Motoren bekannt, bei der ein einzelnes Druckregelventil im Saugrohr angeordnet ist und alle Zylinder gleichmäßig mit Gas beaufschlagt. Diese Anordnung ist wegen des Entfalls von Einblase-Injektoren und Gasdruckleitungen sehr preiswert. Nachteilig ist, dass aufgrund der langen Wege von der Zentraleinblasung hin zum Brennraum hochdynamische Anforderungen der Gemischaufbereitung (Schubabschaltung, Wiedereinsetzen, Lastsprünge etc.) nur unzureichend umgesetzt werden können, d.h. jeder schnellen Änderung im Luftpfad kann der Kraftstoffpfad nicht mit gleicher Geschwindigkeit folgen. Daraus ergeben sich temporär starke Lambdaabweichungen vom stöchiometrischen Luft-Kraftstoff-Verhältnis, die zu einem suboptimalen Wirkungsgrad der nachgeschalteten Abgasreinigung führen und zu NOₓ- bzw. HC- und CO-Durchbrüchen führen können.

Aus der DE 101 46 063 A1 ist ein Verfahren zum Betriebsartenwechsel für mit einem ersten flüssigen Brennstoff oder einem anderen zweiten Brennstoff zu betreibende Verbrennungsmotoren bekannt. Hierbei erfolgt ein automatisches Umschalten zwischen Gas- und Benzin-Betrieb, wenn beispielsweise eine Motortemperatur und/oder eine Ansauglufttemperatur für den Betrieb mit dem momentan angeschalteten Brennstoff zu niedrig ist oder wenn eine Katalysatortemperatur zu hoch ist oder wenn der Vorrat eines der beiden Brennstoffarten zur Neige geht.

Der Erfindung liegt die Aufgabe zugrunde, ein Verfahren der o. g. Art bzgl. Kraftstoffverbrauch und Schadstoffemissionen zu verbessern.

Diese Aufgabe wird erfindungsgemäß durch ein Verfahren der o. g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o. g. Art erfindungsgemäß vorgesehen, dass im Gasbetrieb für vorbestimmte Änderungen des Betriebszustandes der Brennkraftmaschine zusätzlich zum Gasbetrieb zeitlich begrenzt solange ein Benzin- oder Diesel-Massenstrom zum Erreichen des geänderten Betriebszustandes eingestellt wird, bis ein Gasmassenstrom allein den geänderten Betriebszustand aufrecht erhalten kann.

Dies hat den Vorteil, dass hochdynamische Anforderungen an die Gemischaufbereitung trotz langer Ansprechzeiten bei einer Änderung des Gasmassenstromes in kurzen Zeitintervallen umgesetzt werden können, wobei sobald wie möglich auf einen schadstoffgünstigeren vollständigen Gasbetrieb zurück gestellt wird.

Beispielsweise umfassen die vorbestimmten Änderungen des Betriebszustandes ein positiver Lastsprung oder ein Wiedereinsetzen nach einer Schubabschaltung.

In einer bevorzugten Ausführungsform wird aus einer Regelanforderung für eine Lambdaregelung und/oder einer Änderung des Luftmassenstromes über ein erstes Kennfeld ein Gas-Benzin/Diesel-Verhältnis für eine Korrekturanforderung bestimmt und zusätzlich zum Gasmassenstrom der Benzin- oder Diesel-Massenstrom eingestellt, solange das Gas-Benzin/Diesel-Verhältnis kleiner 1 ist. Als anteiliger Benzin- oder Diesel-Massenstrom wird hierbei ein Wert eingestellt, welcher einer Differenz zwischen 1 und dem Gas-Benzin/Diesel-Verhältnis entspricht. Aus einer Regelanforderung für eine Lambdaregelung und/oder einer Änderung des Luftmassenstromes wird über ein zweites Kennfeld eine Korrekturanforderung für einen gesamten Energie-Massenstrom bestimmt. Aus einem Luftmassenstrom wird über ein drittes Kennfeld eine Grundanforderung für den Gasmassenstrom bestimmt. Zum Bestimmen eines Wertes für den momentan erforderlichen Gasmassenstrom wird der Wert für die Korrekturanforderung für den gesamten Energie-Massenstrom mit dem Gas-Benzin/Diesel-Verhältnis multipliziert und zu der Grundanforderung für den Gasmassenstrom hinzu addiert.

Zweckmäßigerweise wird das Gas zentral an einer Stelle in eine Ansauganlage der Brennkraftmaschine eingeblasen.

In besonders vorteilhafter Weise wird das Benzin oder Diesel des Benzin- oder Diesel-Massenstroms direkt in Arbeitszylinder der Brennkraftmaschine eingespritzt.

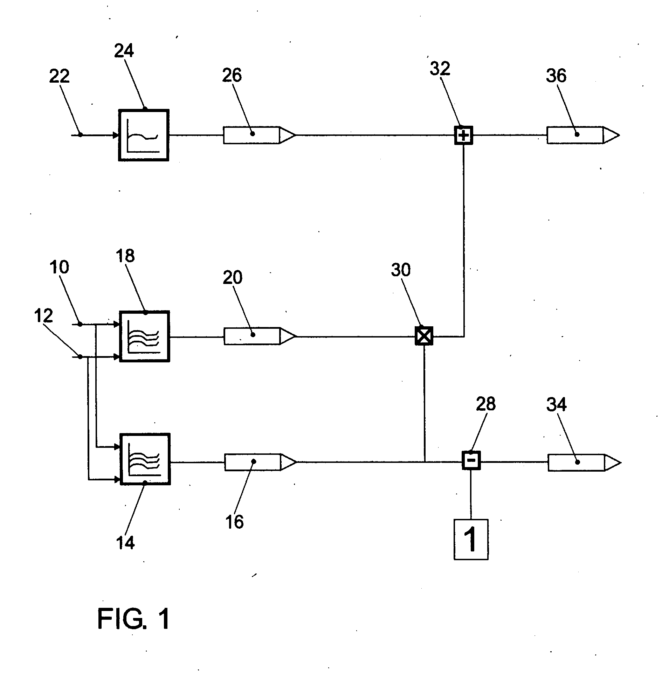

Die Erfindung wird im Folgenden anhand der Zeichnung näher erläutert. Diese zeigt in der einzigen Fig. ein schematisches Ablaufdiagramm einer Regelstrategie des erfindungsgemäßen Verfahrens während eines Gasbetriebs.

Die einzige Fig. veranschaulicht schematisch eine bevorzugte Ausführungsform des Erfindungsgemäßen Verfahrens zum Betreiben einer Brennkraftmaschine, der wahlweise Benzin bzw. Diesel oder Gas als Brennstoff zugeführt wird. Der Ausdruck "Gas" beinhaltet hierbei insbesondere Flüssiggas bzw. Autogas (LPG = Liquified Petrolium Gas = Propan-Butan-Gemisch) und Erdgas (CNG = Compressed Natural Gas). Die Brennkraftmaschine ist beispielsweise monovalent, d.h. auf den Betrieb mit Gas optimiert, oder bivalent ausgelegt, d.h. auf Benzin/Diesel-Betrieb optimiert. Hierin wird lediglich beispielhaft auf Benzin als zu Gas alternativer Brennstoff Bezug genommen, wobei jedoch der Ausdruck "Benzin" lediglich stellvertretend auch für andere bei Umgebungstemperatur flüssige Brennstoffe, wie beispielsweise Diesel, Biodiesel oder Rapsöl, steht.

Bei der aus der einzigen Fig. ersichtlichen Regelstrategie für die Brennkraftmaschine während eines Gas-Betriebs, d.h. es wird Gas in Form eines Gasmassenstromes als Brennstoff zugeführt, wird aus einem Wert 10 für die Regelanforderung der Lambdaregelung und einem Wert 12 für die Änderung des Luftmassenstromes mittels eines ersten Kennfeldes 14 ein Wert 16 für das Gas-Benzin-Verhältnis für eine Korrekturanforderung des gesamten Energiemassenstromes bestimmt. Weiterhin wird aus dem Wert 10 für die Regelanforderung der Lambdaregelung und dem Wert 12 für die Änderung des Luftmassenstromes mittels eines zweiten Kennfeldes 18 ein Wert 20 für die Korrekturanforderung für den gesamten Energiemassenstrom bestimmt. Das zweite Kennfeld 18 ist derart ausgelegt, dass es die gesamte benötigte Korrektur für den Gasmassenstrom für einen neuen Betriebszustand der Brennkraftmaschine bestimmt. Aus einem Wert 22 für einen Luftmassenstrom wird mittels eines dritten Kennfeldes 24 ein Wert 26 für eine Grundanforderung des Gasmassenstromes bestimmt.

Der Wert 16 für das Gas-Benzin-Verhältnis der Korrekturanforderung wird bei 28 von eins subtrahiert, wodurch sich ein Wert 34 für den Anteil des Benzin-Massenstromes am Korrekturwert für den gesamten Energie-Massenstrom ergibt. Bei 30 wird der Wert 16 für das Gas-Benzin-Verhältnis der Korrekturanforderung mit dem Wert 20 für die Korrekturanforderung für den gesamten Energiemassenstrom multipliziert, wodurch sich ein Anteil des Gasmassenstromes am Korrekturwert ergibt, und bei 32 dem Wert 26 für die Grundanforderung des Gasmassenstromes hinzu addiert, so dass sich hieraus ein Wert 36 für den Gasmassenstrom aus Grundanforderung und Anteil am Korrekturwert ergibt.

Das erste Kennfeld 14 ist derart ausgelegt, dass es bestimmt, ob die Regelanforderung der Lambdaregelung bzw. deren Änderung und/oder die Änderung des Luftmassenstromes ausreichend durch eine Änderung des Gasmassenstromes bedient werden kann, um den neuen sich ergebenden Betriebzustand der Brennkraftmaschine in entsprechend kurzer Zeit zu erreichen. Falls nicht, ergibt sich ein Wert 16 für das Gas-Benzin-Verhältnis der Korrekturanforderung welcher kleiner ist als 1, wobei dieser Wert 16 um so kleiner ist, je größer die Änderung des Betriebszustandes ist. Somit wird ein Teil der Korrektur für den gesamten Energie-Massenstrom von dem Benzin-Massenstrom geliefert, der insbesondere bei zentraler Gaseinblasung wesentlich schneller auf die Änderung reagiert als der Gasmassenstrom. Somit wird automatisch eine zusätzliche Befeuerung der Brennkraftmaschine mit Benzin durchgeführt. Mit zunehmender Zeit nach einer Änderung der Regelanforderung (Wert 10) und des Luftmassenstromes 22 (Wert 12) kann jedoch der Gasmassenstrom nachgezogen werden und den neuen Betriebszustand ausreichend bedienen, so dass der Wert 16 für das Gas-Benzin-Verhältnis der Korrekturanforderung sich immer mehr eins nähert. Sobald das erste Kennfeld einen Wert eins für das Gas-Benzin-Verhältnis der Korrekturanforderung liefert, ergibt sich bei 28 ein Wert von 0 für den Wert 34 für den Benzin-Massenstrom, so dass dann wieder vollständig auf eine Befeuerung der Brennkraftmaschine mit Gas umgestellt ist.

Durch die voranstehende Regelstrategie werden erfindungsgemäß bei Quasi-monovalenten sowie bei bivalenten, gasbetriebenen Brennkraftmaschinen, beispielsweise CNG-Motoren, Dynamikeffekte bei positiven Lastwechseln über den Benzinpfad ausgeregelt. Dies bedeutet beispielsweise, dass bei positivem Lastsprung die Zentraleinblasung von Gas sofort mit einer Mengenanhebung reagiert. Aufgrund der Saugrohrlänge und der Strömungspulsationen werden jedoch nicht alle Zylinder umgehend mit nahezu stöchiometrischem Luft-Gas-Gemisch versorgt.

Daher wird erfindungsgemäß sowohl die Vorsteuerung als auch temporär die Lambdaregelung überwiegend auf den Benzinpfad geleitet, optimal in Verbindung mit Benzindirekteinspritzung. Dies erfolgt beispielsweise, wie bei der obigen beispielhaften Regelstrategie beschrieben, durch eine Überwachung der Änderung des Luftmassenstroms sowie der Lambdaregelung. Abhängig von der Änderung des Luftmassenstroms und/oder der Regelanforderung der Lambdaregelung werden Vorsteuerung und Regelung im Gasbetrieb zunehmend auf den Benzinpfad geleitet. Somit ist sichergestellt, dass bei schnellen Gemischanpassungen der am leichtesten anzupassende Benzinpfad zusätzlich zum Gaspfad aktiviert wird. Bei langsamen Änderungen des Luftmassenstroms sowie bei kleinen Regelanforderungen der. Lambdaregelung kann ausschließlich der Gaspfad genutzt werden. Dies entscheidet das erste Kennfeld 14.

Die Erfindung ist besonders preisgünstig, da ein Entfall von Gas-Einblase-Injektoren und trotzdem Erfüllung scharfer Abgasgrenzwerte (EU IV, EU V, LEV II, ULEV II, SULEV II) ermöglicht wird. Sinngemäß ist die Erfindung auch auf eine zentrale Flüssiggaseinspritzung bei einem bivalenten Benzin-LPG-Motor anwendbar. Wegen der Flüssigeinspritzung ist zusätzlich ein Saugrohr-Wandfilmmodell erforderlich, dessen Aufbau- und Abdampfeffekte ebenfalls vorteilhafterweise über den Benzinpfad ausgeregelt werden.

### Bezugszeichenliste

- 10: Wert für die Regelanforderung der Lambdaregelung
- 12: Wert für die Änderung des Luftmassenstromes
- 14: erstes Kennfeldes
- 16: Wert für das Gas-Benzin-Verhältnis der Korrekturanforderung
- 18: zweites Kennfeldes 18
- 20: Wert für die Korrekturanforderung für den gesamten Energiemassenstrom
- 22: Wert für einen Luftmassenstrom
- 24: drittes Kennfeldes
- 26: Wert für eine Grundanforderung des Gasmassenstromes
- 28: Subtraktion des Wertes 16 von eins
- 30: Multiplikation Wert 16 mit Wert 20
- 32: Addition zu Wert 26
- 34: Wert für den Benzin-Massenstrom
- 36: Wert für den Gasmassenstrom

## Patentansprüche

1. Verfahren zum Betreiben einer Brennkraftmaschine, insbesondere eines Kraftfahrzeuges, welche sowohl mit Benzin und/oder Diesel als auch mit Gas, insbesondere Erdgas (CNG) oder Flüssiggas (LPG), betrieben wird, **dadurch gekennzeichnet, dass** im Gasbetrieb für vorbestimmte Änderungen des Betriebszustandes der Brennkraftmaschine zusätzlich zum Gasbetrieb zeitlich begrenzt solange ein Benzin- oder Diesel-Massenstrom zum Erreichen des geänderten Betriebszustandes eingestellt wird, bis ein Gasmassenstrom allein den geänderten Betriebszustand aufrecht erhalten kann.

2. Verfahren nach Anspruch 1, **dadurch gekennzeichnet, dass** die vorbestimmten Änderungen des Betriebszustandes ein positiver Lastsprung oder ein Wiedereinsetzen nach einer Schubabschaltung umfassen.

3. Verfahren nach wenigstens einem der vorhergehenden Ansprüche, **dadurch gekennzeichnet, dass** aus einer Regelanforderung für eine Lambdaregelung und/oder einer Änderung des Luftmassenstromes über ein erstes Kennfeld ein Gas-Benzin/Diesel-Verhältnis für eine Korrekturanforderung bestimmt wird und zusätzlich zum Gasmassenstrom der Benzin- oder Diesel-Massenstrom eingestellt wird, solange das Gas-Benzin/Diesel-Verhältnis kleiner 1 ist.

4. Verfahren nach Anspruch 3, **dadurch gekennzeichnet, dass** als anteiliger Benzin- oder Diesel-Massenstrom ein Wert eingestellt wird, welcher einer Differenz zwischen 1 und dem Gas-Benzin/Diesel-Verhältnis entspricht.

5. Verfahren nach Anspruch 3 oder 4, **dadurch gekennzeichnet, dass** aus einer Regelanforderung für eine Lambdaregelung und/oder einer Änderung des Luftmassenstromes über ein zweites Kennfeld eine Korrekturanforderung für einen gesamten Energie-Massenstrom bestimmt wird.

6. Verfahren nach wenigstens einem der Ansprüche 3 bis 5, **dadurch gekennzeichnet, dass** aus einem Luftmassenstrom über ein drittes Kennfeld eine Grundanforderung für den Gasmassenstrom bestimmt wird.

7. Verfahren nach Anspruch 5 und 6, **dadurch gekennzeichnet, dass** zum Bestimmen eines Wertes für den momentan erforderlichen Gasmassenstrom der Wert für die Korrekturanforderung für den gesamten Energie-Massenstrom mit dem Gas-Benzin/Diesel-Verhältnis multipliziert und zu der Grundanforderung für den Gasmassenstrom hinzu addiert wird.

8. Verfahren nach wenigstens einem der vorhergehenden Ansprüche, **dadurch gekennzeichnet, dass** das Gas zentral an einer Stelle in eine Ansauganlage der Brennkraftmaschine eingeblasen wird.

9. Verfahren nach wenigstens einem der vorhergehenden Ansprüche, **dadurch gekennzeichnet, dass** das Benzin/Diesel des Benzin- oder Diesel-Massenstroms direkt in Arbeitszylinder der Brennkraftmaschine eingespritzt wird.
